(19) **Europäisches Patentamt**

**European Patent Office**

**Office européen des brevets**

(11) **EP 1 086 990 A1**

(12) **EUROPEAN PATENT APPLICATION**
published in accordance with Art. 158(3) EPC

(43) Date of publication:
28.03.2001 Bulletin 2001/13

(51) Int. Cl.$^7$: **C08L 27/16**, C08L 33/08, C08K 5/14, B32B 25/04

(21) Application number: 99918264.5

(22) Date of filing: 21.04.1999

(86) International application number:
PCT/JP99/02120

(87) International publication number:
WO 99/55778 (04.11.1999 Gazette 1999/44)

(84) Designated Contracting States:
DE FR GB IT

(30) Priority: 27.04.1998 JP 13436798

(71) Applicant:
Daikin Industries, Ltd.
Osaka-shi Osaka 530-8323 (JP)

(72) Inventors:
• MATSUMOTO, Kazuhisa,
Daikin Ind. Ltd.
Settsu-shi, Osaka 566-8585 (JP)

• NOGUCHI, Tsuyoshi,
Daikin Ind. Ltd.
Settsu-shi, Osaka 566-8585 (JP)
• SHIRAI, Yoshihiro,
Daikin Ind. Ltd.
Settsu-shi, Osaka 566-8585 (JP)

(74) Representative: Barz, Peter
Kaiserplatz 2
80803 München (DE)

(54) **LOWLY SWELLING RUBBER COMPOSITION AND MOLDED ARTICLE OBTAINED THEREFROM**

(57) The present invention provides the following low-swelling rubber composition and a molded article prepared therefrom: a low-swelling rubber composition comprising 100 parts by weight of a mixture (hereinafter referred to as "composition (A)") and 0.1 to 15 parts by weight of a peroxide crosslinking agent admixed therewith, the composition (A) comprising 5 to 95 wt.% of a peroxide-crosslinkable fluororubber containing vinylidene fluoride copolymerized therein in a proportion of 45 to 88 mole % and having a number average molecular weight of 5,000 to 200,000, and 95 to 5 wt.% of an acrylic rubber containing (i) 0.1 to 1.5 wt. % of a polyfunctional monomer copolymerized therein and having a functional group rendering the acrylic rubber peroxide-cocrosslinkable with the fluororubber and a functional group effecting the copolymerization of the monomer with a (meth)acrylic ester, (ii) 20 wt.% or more of (meth) acrylic alkoxy-substituted alkyl ester copolymerized therein and/or (iii) 4 wt.% or more of acrylonitrile copolymerized therein.

EP 1 086 990 A1

Printed by Xerox (UK) Business Services
2.16.7 (HRS)/3.6

**Description**

TECHNICAL FIELD

The present invention relates to a low-swelling rubber composition and molded articles produced therefrom.

BACKGROUND ART

Fluororubbers are excellent in fuel resistance and resistance to chemicals and are useful in the fields of industrial materials, automotive materials and the like. Nevertheless, it appears unlikely that these rubbers will be used in remarkably increased quantities in spite of their outstanding properties since economy is not negligible for prevalent use in these fields.

Acrylic rubber, because of its excellent oil resistance, is widely used in a condition wherein it is in contact with engine oil or mission oil in automobiles. However, generally acrylic rubber is not used in a condition wherein it is in contact with fuels because of its low fuel resistance.

Among other rubbers than fluororubbers, copolymer rubber of nitrile monomer, rubber of its hydrogenated copolymer and hydrin-type rubber are frequently used in a condition wherein they are in contact with fuels because of their relatively high fuel resistance.

However, in recent years, a regulation for control of fuel emission in the air has become effective in view of environmental problem posed by automobiles. In this situation, the copolymer rubber of nitrile monomer, rubber of its hydrogenated copolymer and hydrin-type rubber are considered insufficient in fuel resistance and resistance to permeation of fuel of a hose.

In order to solve the above problem, it is investigated and practiced to laminate a fluororubber, and nitrile-type rubber or its hydrogenated rubber, hydrin-type rubber and the like and then to prepare a hose therefrom by molding. However, since the fluororubber is poor in affinity with other rubbers, and is different in cure formulation, there arises a problem that the laminate has a low adhesiveness between layers and is liable to separate. Further the amount of the fluororubber is limited in view of cost, and it is difficult to improve sufficiently the fuel resistance and resistance to permeation of fuel of a hose.

An object of the present invention is to provide a low-swelling rubber composition which is excellent in fuel resistance, resistance to permeation of fuel and resistance to chemicals, molded articles prepared therefrom, rubber laminates prepared therefrom and rubber articles prepared therefrom.

DISCLOSURE OF THE INVENTION

The present invention provides the following low-swelling rubber composition and a molded article prepared therefrom: a low-swelling rubber composition comprising 100 parts by weight of a mixture (hereinafter referred to as "composition (A)") and 0.1 to 15 parts by weight of a peroxide crosslinking agent admixed therewith, the composition (A) comprising 5 to 95 wt.% of a peroxide -crosslinkable fluororubber containing vinylidene fluoride copolymerized therein in a proportion of 45 to 88 mole % and having a number average molecular weight of 5,000 to 200,000, and 95 to 5 wt.% of an acrylic rubber containing (i) 0.1 to 1.5 wt.% of a polyfunctional monomer copolymerized therein and having a functional group rendering the acrylic rubber peroxide-cocrosslinkable with the fluororubber and a functional group effecting the copolymerization of the monomer with a (meth)acrylic ester, (ii) 20 wt.% or more of (meth)acrylic alkoxy-substituted alkyl ester copolymerized therein and/or (iii) 4 wt.% or more of acrylonitrile copolymerized therein.

The term "(meth)acrylic ester" used above includes (meth)acrylic alkyl ester and (meth) acrylic alkoxy-substituted alkyl ester.

According to the low-swelling rubber composition of the invention, examples of peroxide-crosslinkable fluororubbers are vinylidene fluoride copolymers such as vinylidene fluoride/hexafluoropropylene, vinylidene fluoride/tetrafluoroethylene/hexafluoropropylene and vinylidene fluoride/chlorotrifluoroethylene; copolymers such as fluoro(alkyl vinyl ether)/olefin (for example, vinylidene fluoride/tetrafluoroethylene/perfluoroalkyl vinyl ether), etc. Preferable among these are elastomers of vinylidene fluoride/hexafluoropropylene and vinylidene fluoride/tetrafluoroethylene/hexafluoropropylene. The fluoro(alkyl vinyl ether) may contain a plurality of ether linkages. These fluororubbers are 5,000 to 200,000, preferably 50,000 to 170,000, in molecular weight, i.e., in number average molecular weight. The fluororubber fails to give satisfactory processability if exceeding 200,000 in molecular weight, while fully acceptable characteristics are unavailable after vulcanization if the molecular weight is lower than 50,000. The term processability means the viscosity of polymer at high temperatures, vulcanization characteristics and amenability to rolling process. The proportion of copolymerized vinylidene fluoride in the fluororubber is 45 to 88 mole %, preferably 55 to 85 mole %.

The fluororubber is low in compatibility with acrylic rubbers and encounters difficulty in giving higher dispersibility to polymers and sufficient mechanical property is not obtained if less than 45 mole % in the proportion of copolymerized vinylidene fluoride. Impaired compression set will result if this proportion exceeds 88 mole %.

The fluororubbers of the invention include, for example, iodine-containing fluororubbers, which will be described below.

The preferred examples of iodine-containing fluororubbers include a readily curable fluororubber (see JP-A-125491/1978) which is obtained by polymerizing vinylidene fluoride (VdF) and at least one of monomers comprising a fluorine-containing ethylenically unsaturated compound having 2 to 8 carbon atoms (and when required, a fluorine-free ethylenically unsaturated compound having 2 to 4 carbon atoms) in the presence of a radical generator and an iodine compound represented by the formula $RI_x$ (wherein R is a saturated or unsaturated fluorohydrocarbon group having 1 to 16 carbon atoms, chlorofluorohydrocarbon group or hydrocarbon group having 1 to 3 carbon atoms, and x, which is the number of bonds of R, is an integer of not smaller than 1). Useful iodine- containing fluororubbers are copolymers containing 45 to 88 mole %, preferably 55 to 85 mole %, of vinylidene fluoride (VdF) unit, 0 to 45 mole %, preferably 0 to 30 mole %, of tetrafluoroethylene (TFE) unit and 10 to 40 mole %, preferably 10 to 25 mole %, of hexafluoropropylene (HFP) unit.

In the low- swelling rubber composition of the invention, the acrylic rubber can be prepared from a suitable combination of the under-mentioned (meth)acrylic alkyl ester, polyfunctional monomer, (meth)acrylic alkoxy-substituted alkyl ester, acrylonitrile and ethylenically unsaturated monomer by copolymerizing the monomers by a known polymerization process. Examples of the (meth)acrylic alkyl ester to be used herein are, for example, compounds represented by the formula

$$CH_2=C(R^1)COOR^2$$

wherein $R^1$ is a hydrogen atom or methyl, and $R^2$ is alkyl having 1 to 18 carbon atoms. Examples of such monomers are methyl (meth)acrylate, ethyl (meth)acrylate, n-propyl (meth)acrylate, n-butyl (meth)acrylate, isobutyl (meth)acrylate, n-pentyl (meth)acrylate, isoamyl (meth)acrylate, n-hexyl (meth)acrylate, 2-methylpentyl (meth)acrylate, n-octyl (meth)acrylate, 2-ethylhexyl (meth)acrylate, n-decyl (meth)acrylate, n-dodecyl (meth)acrylate and n-octadecyl (meth)acrylate. Among them, preferable are methyl acrylate, ethyl acrylate, n-propyl acrylate and n-butyl acrylate, and more preferable are ethyl acrylate and n-butyl acrylate.

The polyfunctional monomer has at least two double bonds in the molecule and possesses (a) a functional group rendering the acrylic rubber peroxide-cocrosslinkable with the fluororubber and (b) a functional group effecting the copolymerization with a (meth)acrylic ester. Examples of polyfunctional monomers are ethylene glycol di(meth)acrylate, 1,4 -butanediol di(meth)acrylate, 1,6-hexanediol di(meth)acrylate, polyethylene glycol di(meth)acrylate, allyl (meth)acrylate, divinylbenzene, triallylcyanurate and triallyl isocyanurate. Bifunctional monomers are desirable because use of a monomer having three or more functional groups is likely to present difficulty in controlling the proportion of partially crosslinked component in the resulting copolymer. When the monomer has only one double bond in the molecule, no crosslinking group remains in the acrylic rubber, which therefore is difficult to be cocrosslinked along with the fluororubber. More desirable among the bifunctional monomers are those wherein two double bonds are different in reactivity in order to permit one of the double bonds to remain in the acrylic rubber as a crosslinking group. More preferable is allyl (meth)acrylate. Although dihydrodicyclopentenyl acrylate and ethylidene norbornene are included in monomers wherein the two double bonds are different in reactivity, these are not usable singly and have to be used conjointly with allyl (meth)acrylate. This is because the bifunctional monomer must be fully crosslinkable with the same auxiliary crossliking agent as is useful for the fluororubber.

The polyfunctional monomer is used in an amount of 0.1 to 1.5 wt.%, preferably 0.3 to 0.7 wt.%, based on the combined amount of (meth)acrylic ester, acrylonitrile and polyfunctional monomer. If a smaller amount of polyfunctional monomer is used, the acrylic rubber will not be crosslinked sufficiently, presenting difficulty in vulcanization molding and resulting in low heat resistance and poor mechanical properties. An excess of polyfunctional monomer, if used, produces an increased amount of partially crosslinked component in the copolymer, leads to impaired processability and causes vulcanization to result in an excessively high crosslinking density, consequently giving a material which is no longer flexible, impaired in elongation and unusable for materials such as a hose, a tube or the like.

Examples of (meth)acrylic alkoxy-substituted alkyl ester are compounds represented by the formula

$$CH_2=C(R^1)COO-A-O-R^3$$

wherein A is alkylene having 1 to 12 carbon atoms, $R^1$ is as defined above and $R^3$ is alkyl having 1 to 12 carbon atoms. Examples of such compounds are 2 -methoxyethyl (meth) acrylate, 2-ethoxyethyl (meth)acrylate, 2-(n-propoxy)ethyl (meth)acrylate, 2-(n-butoxy)ethyl (meth)acrylate, 3-methoxypropyl (meth)acrylate, 3-ethoxypropyl (meth)acrylate, 2-(n-propoxy)propyl (meth)acrylate and 2-(n-butoxy)propyl (meth)acrylate. Among them, preferred are 2-methoxyethyl acrylate and 2-ethoxyethyl acrylate, and more preferred is 2-methoxyethyl acrylate.

The (meth) acrylic alkoxy-substituted alkyl ester is used preferably in an amount of 20 to 99.9 wt.%, based on the combined amount of (meth)acrylic ester, acrylonitrile and polyfunctional monomer. If less than 20 wt.% of (meth)acrylic alkoxy-substituted alkyl ester is used, the acrylic rubber shows lower fuel resistance and resistance to permeation of fuel when the blend ratio of the fluororubber to the acrylic rubber is fixed for an economical reason.

The acrylonitrile is used preferably in an amount of 4 to 15 wt.%. If less than 4 wt.% of acrylonitrile is used, the acrylic rubber is low in swelling degree and resistance to permeation of fuel relative to fuel resistance when the blend ratio of the fluororubber to the acrylic rubber is fixed for an economical reason. If more than 15 wt.% is used, the acrylic rubber exhibits impaired low-temperature characteristics.

If use is made of more than 20 wt.% of (meth)acrylic alkoxy-substituted alkyl ester and more than 4 wt.% of acrylonitrile, the acrylic rubber is further improved in swelling degree and resistance to permeation of fuel relative to fuel resistance.

Preferably $R^2$ and $R^3$ have 1 to 4 carbon atoms. With an increase in the number of carbon atoms and an increase in the proportion of the ester monomer to be copolymerized, the acrylic rubber shows more excellent low-temperature characteristics but lower fuel resistance and lower compatibility with the fluororubber.

When required to obtain a modified polymer, the (meth)acrylic ester monomer to be polymerized may be partly replaced by an ethylenically unsaturated monomer such as styrene, vinyl acetate, ethylene or vinyl chloride. The amount of substitute is preferably up to 20 wt. % of the (meth)acrylic ester monomer.

According to the rubber composition (A) of the invention, the ratio of the fluororubber to the acrylic rubber, i.e., flurororubber/acrylic rubber, is 5~95/95~5 by weight, preferably 10~90/90~10, more preferably 25~75/75~25. If a lesser amount of fluororubber is used, the resulting material will not have sufficiently improved fuel resistance and will be impaired in processability including flowability, whereas an excess of the fluororubber is undesirable economically.

Peroxide crosslinking agents useful for the low-swelling rubber composition of the invention are generally those which readily produce a peroxy radical when heated or in the presence of an oxidizing or reducing system. Examples of such agents are 1,1-bis(tert-butylperoxy)-3,5,5-trimethylcyclohexane, 2,5-dimethylhexane-2,5-dihydroxy peroxide. di-tert-butyl peroxide, tert-butylcumyl peroxide, dicumyl peroxide, $\alpha, \alpha'$-bis(tert-butylperoxy)-p-diisopropylbenzene, 2, 5-dimethyl-2,5-di(tert-butylperoxy)hexane, 2,5-dimethyl-2,5-di(tert- butylperoxy)hexyne-3, benzoyl peroxide, tert-butylperoxybenzene, 2,5-dimethyl-2,5-di(benzoylperoxy)hexane, tert-butylperoxymaleic acid, tert-butylperoxyisopropyl carbonate, etc. Preferable among these are dialkyl compounds. The kind of agent and the amount thereof to be used are determined in view of the amount of active -O-O- and the decomposition temperature. The amount is usually 0.1 to 15 parts by weight, preferably 0.3 to 5 parts by weight, per 100 parts by weight of the polymers (combined amount of acrylic rubber and fluororubber).

When required, a suitable auxiliary crosslinking agent may be used conjointly. As a rule, useful auxiliary crosslinking agents are not limited particularly in type insofar as they are reactive on peroxy radicals and polymer radicals. Examples of desirable agents are triallyl cyanurate, triallyl isocyanurate, triacrylformal, triallyl trimellitate, dipropargyl terephthalate, diallyl phthalate, tetraallylterephthalamide, triallyl phosphate, bismaleimide, etc. Although the auxiliary crosslinking agent need not always be used, the amount thereof to be used is preferably 0.1 to 10 parts by weight, more preferably 0.3 to 5 parts by weight, per 100 parts by weight of the polymers (total of acrylic rubber and fluororubber) to be used. Further, it is possible, as required, to add to rubber composition a crosslinking agent, auxiliary crosslinking agent, filler or the like which is usable in the composition to be laminated.

According to the low-swelling rubber composition of the invention, processing aids, antioxidants, age resistors, antiozonants, ultraviolet absorbers, etc. can be added to the composition when required.

Examples of useful fillers are magnesium oxide, calcium oxide, titanium oxide, silicon oxide, aluminum oxide and like metal oxides, magnesium hydroxide, aluminum hydroxide, calcium hydroxide and like metal hydroxides, magnesium carbonate, aluminum carbonate, calcium carbonate, barium carbonate and like carbonates, magnesium silicate, calcium silicate, sodium silicate, aluminum silicate and like silicates, aluminum sulfate, calcium sulfate, barium sulfate and like sulfates, synthetic hydrotalcite, molybdenum disulfide, iron sulfide, copper sulfide and like metal sulfides, kieselguhr, asbestos, lithopone (zinc sulfide/barium sulfate), graphite, carbon black, carbon fluoride, calcium fluoride, coke, etc.

Examples of processing agents are stearic acid, oleic acid, palmitic acid, lauric acid and like higher fatty acids, sodium stearate, zinc stearate and like higher fatty acid salts, stearic acid amide, oleic acid amide and like higher fatty acid amides, ethyl oleate and like higher fatty acid esters, stearylamine, oleylamine and like higher aliphatic amines, carnauba wax, ceresin wax and like petroleum wax, ethylene glycol, glycerin, diethylene glycol and like polyglycols, vaseline, paraffin and like aliphatic hydrocarbons, silicone oil, silicone polymers, low-molecular-weight polyethylene, phthalic acid esters, phosphoric acid esters, rosin, (halogenated) dialkylamines, (halogenated) dialkylsulfones, surfactants, etc.

Examples of antioxidants, age resistors and antiozonants are 2,5-di-tert-amylhydroquinoline and like phenolic compounds, 2,2,4-trimethyl-1,2-dihydroquinoline and like amine-ketone compounds, 4,4'-bis($\alpha,\alpha'$-dimethylbenzyl)diphenylamine and like aromatic secondary amine compounds.

Examples of ultraviolet absorbers are 2,4-dihydroxybenzophenone and like benzophenone compounds, bis(2,2,6,6-tetramethyl-4-piperidyl)sebacate and like amine compounds, 2- (2' -hydroxy-5' -methylphenyl) benzotriazole and like benzotriazole compounds.

In the present invention, a rubber laminate is obtained by adhering with vulcanization the rubber layer (1) containing the low-swelling rubber composition to a rubber layer (2) containing another rubber composition.

The rubber layer (2) of the invention are not specifically limited so far as it adheres sufficiently to the low-swelling composition by vulcanization. Examples thereof are nitrile rubber, its hydrogenated rubber, styrene -butadiene rubber, polychloroprene rubber, ethylene-propylene terpolymer rubber, chlorinated polyethylene, chlorosulfonated polyethylene, silicone rubber, butyl rubber, hydrin rubber, fluororubber, acrylic rubber, ethylene-vinyl acetate copolymer. Among these particularly preferable are fluororubber, acrylic rubber, hydrin rubber, nitrile rubber and its hydrogenated rubber.

Examples of fluororubbers herein are vinylidene fluoride copolymers such as vinylidene fluoride/hexafluoropropylene, vinylidene fluoride/tetrafluoroethylene/hexafluoropropylene and vinylidene fluoride/chlorotrifluoroethylene; copolymers such as tetrafluoroethylene/propylene, tetrafluoroethylene/vinylidene fluoride/propylene, hexafluoropropylene/ethylene and fluoro (alkyl vinyl ether)/olefin (for example, vinylidene fluoride/tetrafluoroethylene/perfluoroalkyl vinyl ether), etc. Preferable among these are elastomers of vinylidene fluoride/hexafluoropropylene and vinylidene fluoride/tetrafluoroethylene/hexafluoropropylene. The fluoro (alkyl vinyl ether) may contain a plurality of ether linkages.

The above acrylic rubber is a copolymer rubber constituted by multiple monomer components of (a) 30 to 99.9 % by weight of alkyl (meth) acryrate and/or alkoxyalkyl (meth) acrylate, (b) 0.1 to 10 % by weight of crosslinkable monomer and (c) 0 to 70 % by weight of other ethylenically unsaturated compound copolymerizable with the above (a) and (b).

The above nitrile rubber is a copolymer rubber constituted by multiple monomer components of (d) 10 to 60 % by weight of $\alpha$, $\beta$-unsaturated nitrile, (e) 15 to 90 % by weight of conjugated diene, and 0 to 75 % by weight of other ethylenically unsaturated compound copolymerizable with the above (d) and (e).

Examples of the above alkyl (meth)acrylate are compounds represented by the formula

$$CH_2=C(R^1)COOR^2$$

wherein $R^1$ and $R^2$ are as defined above. Examples of such compounds are methyl (meth)acrylate, ethyl (meth)acrylate, n-propyl (meth)acrylate, n-butyl (meth)acrylate, isobutyl (meth)acrylate, n-pentyl (meth)acrylate, isoamyl (meth)acrylate, n-hexyl (meth)acrylate, 2-methylpentyl (meth)acrylate, n-octyl (meth)acrylate, 2-ethylhexyl (meth)acrylate, n-decyl (meth)acrylate, n-dodecyl (meth)acrylate and n-octadecyl (meth)acrylate. Among these preferable are methyl acrylate, ethyl acrylate, n-propyl acrylate and n-butyl acrylate, and particularly preferable are methyl acrylate and ethyl acrylate.

Examples of the above alkoxyalkyl (meth)acrylate are compounds represented by the formula

$$CH_2=C(R^1)COO\text{-}A\text{-}O\text{-}R^3$$

wherein A, $R^1$ and $R^3$ are as defined above. Examples of such compounds are 2-methoxyethyl (meth) acrylate, 2-ethoxyethyl (meth)acrylate, 2- (n-propoxy)ethyl (meth)acrylate, 2-(n-butoxy)ethyl (meth)acrylate, 3-methoxypropyl (meth)acrylate, 3-ethoxypropyl (meth) acrylate, 2- (n-propoxy)propyl (meth) acrylate and 2- (n-butoxy)propyl (meth) acrylate. Among these preferable are 2-methoxyethyl acrylate and 2-ethoxyethyl acrylate, and particularly preferable is 2-methoxyethyl acrylate.

Examples of the above crosslinkable monomer are at least one or two of dicyclopentadiene, ethylidenenorbornene, vinyl chloroacetate, allyl chloroacetate, 2-chloroethyl vinyl ether, vinyl (meth)acrylate, allyl (meth)methacrylate, glycidyl (meth)methacrylate, dimethyl steryl vinylsilane, dicyclopentenyl (meth)acrylate, dicyclopentenyloxyethyl (meth) acrylate, alkyl glycidyl ether, vinyl glycidyl ether, 2-chloroethyl (meth)acetate, vinyl monochloroacetate, vinylnorbornene, acrylic acid, methacrylic acid and itaconic acid.

Examples of the above ethylenically unsaturated compound are carboxylic acids such as acrylic acid, methacrylic acid, crotonic acid, 2-pentenic acid, maleic acid, fumaric acid and itaconic acid; methyl meth(meth)acrylate; octyl meth(meth)acrylate; alkyl vinyl ketone such as methyl vinyl ketone; vinyl or allyl ether such as vinyl ethyl ether and acryl methyl ether; vinyl aromatic compounds such as styrene, $\alpha$-methyletyrene, chlorostyrene and vinyltoluene; nitriles such as acrylonitrile and methacrylonitrile; amides such as acrylamide, methacrylamide and N-methylolacrylamide; ethylene; propylene; vinyl chloride; vinylidene chloride; vinyl fluoride; vinylidene fluoride; vinyl acetate; and alkyl fumarate. Among these preferable are acrylonitrile, ethylene and vinyl acetate, and particularly preferable are acrylonitrile and ethylene.

Examples of the above $\alpha$, $\beta$ -unsaturated nitrile are acrylonitrile, $\alpha$-chloroacrylonitrile, $\alpha$-fluoroacrylonitrile, methacrylonitrile and ethacrylonitrile. Among these preferable is acrylonitrile.

Examples of the above conjugated diene are 1,3-butadiene, 2-chloro-1,3-butadiene and 2-methyl-1,3-butaiene. Among them, 1,3-butadiene is preferable.

These rubbers may be blended with a resin such as polyvinyl chloride for economy and for enhancement of resistance to permeation of fuel.

The low-swelling rubber composition of the present invention can be prepared by use of the common type of mixing means, more specifically by processes wherein the fluororubber, acrylic rubber and the other components are mixed by an open roll mill or by an enclosed mixer or a process wherein the emulsion is coagulated. These processes may be carried out in combination.

Molded articles can be produced by conventional methods such as a method wherein the composition is heated and compressed by a mold, a method wherein the composition is forced into a heated mold, and a method wherein the composition is extruded by an extruder and heated by steam. Optionally the molded article may be heat-treated for secondary vulcanization in order to improve the properties.

The rubber laminate of the present invention can be prepared for example by the following method. Specifically, the low-swelling composition is kneaded by use of a mixer such as a cooling roll, Banbury mixer, intermixer or the like, and a mixture of other components is treated similarly. Two layers of the rubber composition and the mixture are extruded simultaneously by an extruder, or alternatively an outer layer is extruded on an inner layer by use of two extruders to prepare an inner tube rubber layer composed by the above inner layer and the above outer layer. An outer tube rubber layer is extruded on the inner tube rubber layer by an extruder to unite the rubber layers and then the united layers are vulcanized for adhesion to obtain the laminate of the present invention.

The rubber layer (1) made of the low-swelling rubber composition and the rubber layer (2) made of other components can be an inner layer or outer layer of the inner tube rubber layer, depending on the use thereof. Thus they can be used as either inner layer or outer layer.

The molded article and the rubber laminate prepared from the low-swelling rubber composition of the invention can sufficiently withstand use under severe conditions and have various uses. For example, the molded article and rubber laminate of the invention have suitable properties as a hose, packing, diaphragm, tube, lining, O-ring, roll, etc. which require low-swelling properties for an automotive engine body, main kinetic system, movable valves, lubricating /cooling system, fuel system, aspiration/exhaustion system or the like. Further the molded article and the rubber laminate of the invention are most suitably used especially in applications wherein they are in contact with fuels: more specifically, as an oil seal, diaphragm and valve for a fuel pump; fuel hoses such as a filler (neck) hose, hose for supply of fuels, hose for return of fuels, vaper (evaporable) hose and vent (breezer) hose; articles for a fuel tank such as in-tank hose, filler seal, tank packing, and in-tank fuel pump mount; a fuel tube and O-ring for a connector in a fuel tube; articles useful in a device for ejection of fuels such as an injector cushion ring, injector seal ring, injector O-ring, pressure regulator diaphragm and check valve; a core valve for a needle valve in a carburetor; a packing for an accelerating pump piston, flange gasket and control hose; a valve sheet for a combined air control apparatus and diaphragm therefor, and the like.

BEST MODE OF CARRYING OUT THE INVENTION

The invention will be described below in greater detail with reference to the following examples and comparative examples. Parts are all by weight.

a) Polymerization of Acrylic Rubber

Into a separable flask equipped with a thermometer, stirrer, nitrogen supply tube and evacuating device were placed 480 parts of water, 0.24 part of sodium bicarbonate, 0.48 part of sodium laurylsulfate, 0.48 parts of Nonipole 200 (polyoxyethylene nonylphenyl ether) and 100 parts of monomer mixture of Table 1, the oxygen within the system was thoroughly removed by repeating evacuation and nitrogen replacement, and 0.01 part of sodium hydrosulfite, 0.002 part of sodium formaldehyde sulfoxylate and 0.005 part of tert-butyl hydroperoxide were thereafter placed in to start a polymerization reaction at 50 °C. The reaction was continued for 6 hours so as to achieve a polymerization conversion within the range of 95 to 99%, followed by salting-out of the reaction mixture, sufficient washing with water and drying to obtain an acrylic rubber. Incidentally, EA stands for ethyl acrylate, MEA for 2-methoxyethyl acrylate and AN for acrylonitrile. "Acrylic ester A," brand name of Mitsubishi Rayon Co., Ltd. was used as it was as allyl methacrylate (hereinafter abbreviated as "AMA"). A-3 to A-6 are examples and A-1 to A-2 are comparative examples.

Table 1

| Acrylic rubber amount (wt.%) | A-1 | A-2 | A-3 | A-4 | A-5 | A-6 |
|---|---|---|---|---|---|---|
| EA | 97.8 | 88.3 | 92.3 | 66.4 | 47.5 | - |
| MEA | - | 9.5 | - | 28.5 | 47.5 | 99.7 |
| AN | 1.9 | 1.9 | 7.4 | 4.8 | 4.7 | - |
| AMA | 0.3 | 0.3 | 0.5 | 0.3 | 0.3 | 0.3 |

b) Polymerization of Fluororubber

Into a polymerization reactor made of stainless steel and having a capacity of 3 liters were placed 1 liter of pure water and 2 g of $C_7F_{15}COONH_4$ serving as an emulsifier, the interior of the system was fully replaced by nitrogen gas, and an initial monomer mixture of VdF/HFP/TFE was forced into the reactor at 80 °C to an internal pressure of 16 kg/cm$^2$ G. Subsequently, 10 ml of a 0.2 wt. % aqueous solution of ammonium persulfate was forced in to start a reaction.

Since the pressure dropped with the progress of the polymerization reaction, $I(CF_2)_4I$ serving as a molecular weight adjusting agent was forced in upon a pressure drop to 15 kg/cm$^2$ G. When the pressure further dropped to 14 kg/cm$^2$ G, the system was repressurized with a continuous monomer mixture of VdF/HFP/TFE to the pressure of 16 kg/cm$^2$ G. The aqueous solution of ammonium persulfate was forced into the system with nitrogen gas every 3 hours in an amount of 10 ml each time to continue the reaction with repeated decrease and increase in the pressure to obtain an aqueous emulsion.

To the emulsion was added a 5 wt.% aqueous solution of potash alum for coagulation, and the coagulated product was washed with water and dried to obtain a rubberlike copolymer. The initial monomer mixture, the amount of $I(CF_2)_4I$, continuous monomer mixture, reaction time and yield are listed in Table 2, in which 2F stands for VdF (vinylidene fluoride), 4F for TFE (tetrafluoroethylene) and 6F for HFP (hexafluoropropylene).

Table 2

| fluororubber | | F-1 | F-2 |
|---|---|---|---|
| initial monomer mixture (mol.%) | 2F | 48 | 53 |
| | 4F | 11 | 5 |
| | 6F | 41 | 42 |
| $I(CF_2)_4I$ (g) | | 0.6 | 0.6 |
| continuous monomer mixture (mol.%) | 2F | 67 | 75 |
| | 4F | 16 | 8 |
| | 6F | 17 | 17 |
| reaction time (hr) | | 13 | 16 |
| yield (g) | | 216 | 220 |

The number average molecular weight of the copolymer and Mooney viscosity ($ML_{1+10}$, 100 °C) were determined by the following method.

[Conditions for Determining Molecular Weight]

Gel permeation chromatograph: High performance GPC device, HLC-8020 (product of Toso Co., Ltd.)

Columns: TSK guard column $H_{hr}$-H (one),

7

TSK gel-G5000H, -G4000H, -G3000H, -G2000H (one each) (products of Toso Co., Ltd.)


Sensor: RI sensor (differential reflectometer) incorporated in HLC-8020

Data analysis: Supersystem Controller SC-8020 (product of Toso Co., Ltd.)

Developer solvent: Tetrahydrofuran

Temperature: 35 °C

Concentration: 0.5 wt. %

Standard polymers for molecular weight calibration curve: Monodisperse polystyrenes, TSK standard POLYSTY-REN [ Mw/Mn=1.14 (max) ] (product of Toso Co., Ltd.)

The composition of the copolymer was determined by 19F NMR measurement.

Mooney viscosity was measured according to JIS K-6300.


Table 3

| fluororubber | F-1 | F-2 |
|---|---|---|
| amount (mole %) | | |
| 2F | 67 | 75 |
| 4F | 16 | 8 |
| 6F | 17 | 17 |
| number average molecular weight ($\times$ 10000) | 13 | 12.6 |
| $ML_{1+10}$, 100 °C | 80 | 79 |


Examples 1 to 14

A fluororubber, acrylic rubber and other components were kneaded in the amounts shown in Table 4 by an open roll mill, giving a low-swelling composition. The obtained composition was press-vulcanized at 160°C for 20 minutes and was subjected to oven vulcanization at 180°C for 4 hours. Seast 116 is carbon black of the MAF type manufactured by Tokai Carbon Co., Ltd., TAIC is triallyl isocyanurate manufactured by Nihon Kasei Co., Ltd., Perhexa 25B is a peroxide manufactured by Nippon Oils & Fats Co., Ltd. and Naugard 445 is an age resistor manufactured by Uniroyal Chemical Co., Ltd. The properties of obtained product were evaluated according to JIS K-6301.

The fuel resistance was evaluated by immersion of a test piece in Fuel C (isooctane/toluene in a volume ratio of 50/50) at 40°C for 48 hours and calculating a ratio of volume change of the test piece, the volume being measured before and after immersion.

The resistance to permeation of fuel was evaluated by placing 14 cc of Fuel C into a 20-cc vol. container of stainless steel, covering the upper opening of the container with a test vulcanized sheet of about 0.5 mm in thickness and fixing and closing the covered portion of the container with a cover of stainless steel having an opening portion of 15 cm$^2$. After the container was accommodated in a thermostatic bath at 40°C for 1 day, the weight W1 (g) of the container was measured and then the weight W2 (g) thereof was measured after accommodation therein for 2 days. The permeating rate was calculated by the equation: (W1-W2) $\times$ thickness/(area of opening portion $\times$ number of days of measurement) . The results are shown in Table 5.

Table 4

| Example | 1 | 2 | 3 | 4 | 5 | 6 | 7 |
|---|---|---|---|---|---|---|---|
| amount (weight) | | | | | | | |
| F-1 | 30 | 30 | 50 | 50 | 70 | 70 | 30 |
| A-3 | 70 | | 50 | | 30 | | |
| A-4 | | 70 | | 50 | | 30 | |
| A-5 | | | | | | 70 | |
| A-6 | | | | | | | |
| amount (weight) | | | | | | | |
| Polymer | 100 | 100 | 100 | 100 | 100 | 100 | 100 |
| Stearic acid | 1 | 1 | 1 | 1 | 1 | 1 | 1 |
| Seast 116 | 40 | 40 | 30 | 30 | 20 | 20 | 40 |
| TAIC | 1 | 1 | 1 | 1 | 1 | 1 | 1 |
| Perhexa 25B | 1.5 | 1.5 | 1.5 | 1.5 | 1.5 | 1.5 | 1.5 |
| Naugard 445 | 1 | 1 | 1 | 1 | 1 | 1 | 1 |
| Example | 8 | 9 | 10 | 11 | 12 | 13 | 14 |
| amount (weight) | | | | | | | |
| F-1 | 30 | 50 | 50 | 70 | 70 | | |
| F-2 | | | | | | 50 | 50 |
| A-5 | | 50 | | 30 | | 50 | |
| A-6 | 70 | | 50 | | 30 | | 50 |
| amount (weight) | | | | | | | |
| Polymer | 100 | 100 | 100 | 100 | 100 | 100 | 100 |
| Stearic acid | 1 | 1 | 1 | 1 | 1 | 1 | 1 |
| Seast 116 | 40 | 30 | 30 | 20 | 20 | 30 | 30 |
| TAIC | 1 | 1 | 1 | 1 | 1 | 1 | 1 |
| Perhexa 25B | 1.5 | 1.5 | 1.5 | 1.5 | 1.5 | 1.5 | 1.5 |
| Naugard 445 | 1 | 1 | 1 | 1 | 1 | 1 | 1 |

Table 5

| Example | | 1 | 2 | 3 | 4 | 5 | 6 | 7 |
|---|---|---|---|---|---|---|---|---|
| Physical properties in original state | | | | | | | | |
| 100 % modulus | | 54 | 46 | 43 | 37 | 34 | 30 | 39 |
| Tensile strength | (kgf/cm$^2$) | 131 | 106 | 142 | 118 | 177 | 156 | 105 |
| Elongation | (%) | 290 | 300 | 400 | 410 | 460 | 480 | 310 |
| Hardness | (JISA) | 76 | 69 | 75 | 68 | 73 | 67 | 68 |
| Fuel resistance | | | | | | | | |
| Degree of swelling in volume (%) | | 54 | 60 | 43 | 48 | 28 | 34 | 53 |
| resistance to permeation of fuel | | | | | | | | |
| permeation rate (g • mm/m$^2$ • day) | | - | - | - | - | - | - | - |
| German torsional test (solvent : iso-propyl alcohol) | | | | | | | | |
| $T_{10}$ | | +3 | -6 | +3 | -6 | +2 | -5 | -9 |
| Example | | 8 | 9 | 10 | 11 | 12 | 13 | 14 |
| Physical properties in original state | | | | | | | | |
| 100 % modulus | | 25 | 31 | 20 | 22 | 16 | 30 | 21 |
| Tensile strength | (kgf/cm$^2$) | 100 | 114 | 110 | 153 | 150 | 119 | 116 |
| Elongation | (%) | 230 | 410 | 330 | 470 | 400 | 380 | 300 |
| Hardness | (JISA) | 66 | 67 | 65 | 66 | 64 | 68 | 65 |
| Fuel resistance | | | | | | | | |
| Degree of swelling in volume (%) | | 26 | 42 | 21 | 30 | 14 | 43 | 23 |
| resistance to permeation of fuel | | | | | | | | |
| permeation rate (g • mm/m$^2$ • day) | | 270 | - | 210 | - | 130 | - | 220 |
| German torsional test (solvent : iso-propyl alcohol) | | | | | | | | |
| $T_{10}$ | | -15 | -9 | -14 | -8 | -13 | -7 | -12 |

Comparative Examples 1 to 3

Composition were prepared each in the same manner as in Examples except that a fluororubber, acrylic rubber and other components were kneaded in the amounts specified in Table 6. The properties of the materials obtained were determined in the same manner as in Examples.

Table 6

| Comparative Example | 1 | 2 | 3 | 4 | 5 | 6 |
|---|---|---|---|---|---|---|
| amount (weight) | | | | | | |
| F-1 | 30 | 30 | 50 | 50 | 70 | 70 |
| A-1 | 70 | | 50 | | 30 | |
| A-2 | | 70 | | 50 | | 30 |
| amount (weight) | | | | | | |
| Polymer | 100 | 100 | 100 | 100 | 100 | 100 |
| Stearic acid | 1 | 1 | 1 | 1 | 1 | 1 |
| Seast 116 | 40 | 40 | 30 | 30 | 20 | 20 |
| TAIC | 1 | 1 | 1 | 1 | 1 | 1 |
| Perhexa 25B | 1.5 | 1.5 | 1.5 | 1.5 | 1.5 | 1.5 |
| Naugard 445 | 1 | 1 | 1 | 1 | 1 | 1 |

Table 7

| Example | | 1 | 2 | 3 | 4 | 5 | 6 |
|---|---|---|---|---|---|---|---|
| Physical properties in original state | | | | | | | |
| 100 % modulus | | 32 | 51 | 28 | 39 | 22 | 31 |
| Tensile strength | (kgf/cm$^2$) | 106 | 108 | 115 | 120 | 148 | 158 |
| Elongation | (%) | 330 | 320 | 440 | 420 | 500 | 480 |
| Hardness | (JISA) | 76 | 70 | 75 | 68 | 72 | 69 |
| Fuel resistance | | | | | | | |
| Degree of swelling in volume (%) | | 87 | 83 | 70 | 66 | 48 | 46 |
| resistance to permeation of fuel | | | | | | | |
| permeation rate (g • mm/m$^2$ • day) | | 950 | - | 780 | 530 | 460 | 450 |
| German torsional test (solvent : iso-propyl alcohol) | | | | | | | |
| $T_{10}$ | | -2 | -5 | -3 | -4 | -2 | -5 |

INDUSTRIAL APPLICABILITY

The use of the low-swelling rubber composition of the invention provides molded products which are excellent in fuel resistance, chemical resistance and resistance to permeation of fuel.

**Claims**

1.    A low-swelling rubber composition comprising 100 parts by weight of a mixture and 0.1 to 15 parts by weight of a peroxide crosslinking agent admixed therewith, the mixture comprising 5 to 95 wt.% of a peroxide-crosslinkable fluororubber containing vinylidene fluoride copolymerized therein in a proportion of 45 to 88 mole % and having a number average molecular weight of 5,000 to 200,000, and 95 to 5 wt.% of an acrylic rubber containing (i) 0.1 to 1.5 wt.% of a polyfunctional monomer copolymerized therein and having a functional group rendering the acrylic rubber peroxide-cocrosslinkable with the fluororubber and a functional group effecting the copolymerization of the monomer with a (meth)acrylic ester, (ii) 20 wt.% or more of (meth)acrylic alkoxy-substituted alkyl ester copolymerized therein and/or (iii) 4 wt.% or more of acrylonitrile copolymerized therein.

2. A low-swelling rubber composition further comprising 0.1 to 10 parts by weight of an auxiliary crosslinking agent per 100 parts by weight of the polymer in the low-swelling rubber composition of claim 1.

3. A low-swelling rubber composition as defined in claim 1 or 2 wherein 25 to 75 % by weight of the fluororubber and 75 to 25 % by weight of the acrylic rubber are used.

4. A low-swelling rubber composition as defined in any one of claims 1 to 3 wherein the fluororubber is an iodine-containing fluororubber.

5. A low-swelling rubber composition as defined in any one of claims 1 to 3 wherein the polyfunctional monomer is allyl (meth) acrylate.

6. A molded rubber article obtained by crosslinking with a peroxide the low-swelling rubber composition of any one of claims 1 to 3.

7. A rubber product wherein the molded article of claim 6 is a hose, packing, diaphragm, tube, lining, O-ring or roll.

8. A rubber laminate obtained by adhering with vulcanization a rubber layer (1) containing the low-swelling rubber composition of any one of claims 1 to 3 to a rubber layer (2) containing another rubber composition.

9. A rubber laminate as defined in claim 8 wherein the rubber layer (2) contains nitrile rubber, its hydrogenated rubber, styrene -butadiene rubber, polychloroprene rubber, ethylene-propylene terpolymer rubber, chlorinated polyethylene, chlorosulfonated polyethylene, silicone rubber, butyl rubber, hydrin rubber, fluororubber, acrylic rubber or ethylene-vinyl acetate copolymer.

10. A rubber product wherein the laminate of claim 8 or 9 is a hose, packing, diaphragm, tube, lining, O-ring or roll.

# INTERNATIONAL SEARCH REPORT

| | International application No. |
| --- | --- |
| | PCT/JP99/02120 |

**A. CLASSIFICATION OF SUBJECT MATTER**
Int.Cl⁶ C08L27/16, C08L33/08, C08K5/14, B32B25/04

According to International Patent Classification (IPC) or to both national classification and IPC

**B. FIELDS SEARCHED**

Minimum documentation searched (classification system followed by classification symbols)
Int.Cl⁶ C08L27/16, C08L33/08, C08K5/14, B32B25/04

Documentation searched other than minimum documentation to the extent that such documents are included in the fields searched

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 2-245046, A (NOK Corp.), 28 September, 1990 (28. 09. 90), Claims ; page 2, upper left column, line 8 to page 3, lower left column, line 1 ; page 3, lower right column, lines 9 to 13 ; Example 3 ; Comparative Example 4 (Family: none) | 1-10 |
| Y | JP, 53-125491, A (Daikin Industries,Ltd.), 1 November, 1978 (01. 11. 78), Claims ; page 5, lower left column, line 15 to upper right column, line 9 & US, 4243770, A | 1-10 |
| Y | JP, 6-41379, A (Bayer AG.), 15 February, 1994 (15. 02. 94), Claims ; column 4, lines 18 to 44 (Family: none) | 1-10 |
| Y | JP, 5-186606, A (Tokai Rubber Industries,Ltd.), 27 July, 1993 (27. 07. 93), Claims ; column 5, line 41 to column 6, line 43 (Family: none) | 1-10 |

| [x] Further documents are listed in the continuation of Box C. | [ ] See patent family annex. |
| --- | --- |

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| 27 July, 1999 (27. 07. 99) | 3 August, 1999 (03. 08. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)

## INTERNATIONAL SEARCH REPORT

| | International application No. |
| --- | --- |
| | PCT/JP99/02120 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP, 6-128387, A (The Yokohama Rubber Co., Ltd.), 10 May, 1994 (10. 05. 94), Claims ; column 1, lines 24 to 35 ; column 1, line 44 to right column 2, line 2 ; column 6, lines 3 to 9 (Family: none) | 8-10 |
| Y | JP, 1-306455, A (Japan Synthetic Rubber Co., Ltd.), 11 December, 1989 (11. 12. 89), Claims ; page 2, upper right column, line 15 to page 3, lower right column, line 18 ; page 4, lower left column, line 14 to lower right column, line 2 ; page 9, lower left column, line 7 to lower right column, line 6 (Family: none) | 1-5, 7 |

Form PCT/ISA/210 (continuation of second sheet) (July 1992)